Europäisches Patentamt

European Patent Office

Office européen des brevets

Veröffentlichungsnummer: **0 285 839**

**A2**

# EUROPÄISCHE PATENTANMELDUNG

Anmeldenummer: 88103779.0

Int. Cl.4 **A47J 27/00 , A47J 27/21**

Anmeldetag: 10.03.88

Priorität: 07.04.87 DE 3711637

Veröffentlichungstag der Anmeldung:
**12.10.88 Patentblatt 88/41**

Benannte Vertragsstaaten:
**AT CH DE ES FR GB GR IT LI SE**

Anmelder: **E.G.O. Elektro-Geräte Blanc u. Fischer**
**Rote-Tor-Strasse Postfach 11 80**
**D-7519 Oberderdingen(DE)**

Erfinder: **Knauss, Hermann**
**Sonnenhalde 6**
**D-7519 Oberderdingen(DE)**

Vertreter: **Patentanwälte RUFF, BEIER und SCHÖNDORF**
**Neckarstrasse 50**
**D-7000 Stuttgart 1(DE)**

Elektrische Heizvorrichtung.

Bei einem Elektro-Heizgefäß (1) besteht der an der Unterseite von einem Heizwiderstand (11) beheizte, insbesondere über eine Bajonettverschluß-Verriegelung befestigte Gefäßboden (4) im wesentlichen aus einem metallischen Werkstoff, während der an den Gefäßboden (4) unmittelbar anschließende und mit diesem dicht verbundene Gefäßmantel (3) im wesentlichen aus Kunststoff besteht. Der Gefäßboden (4) weist als höchste Stelle benachbart zum Gefäßmantel eine einen Temperaturfühler (13) eines Temperaturschalters beeinflussende Meßzone (20) und als tiefste Zone im Anschlußbereich an den Gefäßmantel (3) eine ringrinnenförmige Restflüssigkeits-Vertiefung (21) auf, so daß beim Trockengehen der Meßzone (20) immer noch Flüssigkeit in der Rinne (21) steht und daher die Verbindung zwischen dem Gefäßboden (4) und dem Gefäßmantel (3) auch bei kurzzeitigem Wiedereinschalten des Heizwiderstandes (11) thermisch nicht überlastet werden kann.

Fig. 1

## Elektrische Heizvorrichtung

Die Erfindung betrifft eine elektrische Heizvorrichtung nach dem Oberbegriff des Patentanspruches 1.

Durch die EP-A-0 097 265 ist ein Heizelement zur Beheizung von Behältern bekanntgeworden, bei welchem der gesamte Heizkörper als Rohrheizkörper außerhalb des Behälters liegt, wodurch sich eine insbesondere für den Betrieb praktische Anordnung ergibt, die vor allem für Elektro-Boiler, Waschmaschinen, Reinigungsanlagen, Friteusen o.dgl. geeignet ist.

Elektrische Heizvorrichtungen der genannten Art werden aber auch als Elektro-Kochgefäße, insbesondere zum Erhitzen von Trinkwasser, ausgebildet, bei welchem der Rohrheizkörper im Behälterinneren liegt und der Behälter aus Kunststoff besteht. Die Beheizungen dieser Kochgefäße fallen, insbesondere wegen Überhitzung im Trockenlauf, häufig aus, und außerdem sind ständig Beschädigungen des aus Kunststoff bestehenden Gefäßes sowie daran angebrachter Kunststoffteile durch Überhitzung zu befürchten, weil die partiell auftretenden Temperaturen leicht 100 °C weit übersteigen können.

Der Erfindung liegt die Aufgabe zugrunde, eine elektrische Heizvorrichtung der genannten Art zu - schaffen, die es ermöglicht, die maximal auftretende Temperatur nur an einer begrenzten, gegenüber der insgesamt beheizten Zone kleineren Zone auftreten zu lassen und dadurch empfindliche Zonen vor Überhitzungen zu schützen.

Diese Aufgabe wird bei einem Elektro-Heizgefäß der eingangs beschriebenen Art durch die Merkmale des kennzeichnenden Teiles des Anspruchs 1 gelöst. Gemäß der Erfindung wird eine begrenzte, gegenüber der gesamten Bodenfläche ggf. wesentlich kleinere Bodenzone geschaffen, die als höhere bzw. höchste Zone beim Abnehmen des Flüssigkeitsspiegels auf jeden Fall vorrangig über den Flüssigkeitsspiegel auftaucht und zweckmäßig einer mindestens so hohen mittelbaren oder unmittelbaren Heizbeaufschlagung durch die Beheizung bzw. den Heizwiderstand ausgesetzt ist, wie der oder die tiefer liegenden Bodenbereiche, die dann noch unter Flüssigkeit liegen. Die begrenzte Bodenzone ist zweckmäßig so direkt wärmeleitend von dem Heizwiderstand beheizt, daß dieser wenigstens an einer Stelle sehr nahe an den Temperaturfühler heranreicht, wobei der zugehörige lichte Abstand, insbesondere bei dichter Verlegung des Heizwiderstandes, höchstens etwa in der Größenordnung des einfachen bis doppelten desjenigen lichten Abstandes liegen kann, den benachbarte Abschnitte des Heizwiderstandes voneinander haben. Der den Heizwiderstand oberhalb einer fest vorbestimmten oder einstellbaren Grenztemperatur abgeschaltet haltende Temperaturschalter kann auf eine Abschalttemperatur von nur wenigen Temperaturgraden oberhalb der Siedetemperatur bzw. der maximalen Betriebstemperatur der zu beheizenden Flüssigkeit eingestellt sein, so daß er praktisch sofort, wenn die zugehörige Bodenzone trockengelegt ist, anspricht. Alle übrigen Bodenbereiche liegen dann zweckmäßig noch unter Flüssigkeit, durch welche sie demgegenüber weniger heiß gehalten sind, so daß insbesondere im empfindlichen Übergangsbereich vom Gefäßboden zum Gefäßmantel und in letzterem selbst keine Überhitzungen auftreten können. Entsprechend kann auch der Heizwiderstand gegen Überhitzungen geschützt werden, besonders dann, wenn er so wärmeleitend an den Gefäßboden angeschlossen ist, daß er im wesentlichen dieselbe Temperatur wie dieser aufweist.

Die einzige Meßzone bzw. zwei oder mehr Meßzonen liegen zweckmäßig jeweils in Form eines relativ flachen Domes innerhalb der Anschlußzone bzw. des Übergangsbereiches des Gefäßmantels in den Gefäßboden, obwohl es auch denkbar ist, mindestens eine Meßzone in einer mit dem Hauptgefäßraum kommunizierenden Nebenkammer vorzusehen, in welcher wenigstens bis zu einer den übrigen Gefäßboden bedeckenden Mindest-Spiegelhöhe etwa dieselbe Höhe des Flüssigkeitsspiegels wie in dem Hauptgefäßraum gegeben ist.

Trotz der Anordnung der gegenüber den übrigen Bodenbereichen eindeutig sich abhebenden Meßzone kann der Gefäßboden trotzdem wenigstens an seiner Oberseite nahezu vollständig bzw. über den größten Teil von deren Erstreckung eben ausgebildet werden, wenn der Boden von der ggf. annähernd ebenen und kreisförmig begrenzten Meßzone oder bei flachkegeliger Ausbildung von deren höchsten Stelle nur mit äußerst geringem Gefälle von Beispielsweise nur etwa 3 Winkelgraden abfällt.

Bereits bei der zuletzt genannten Ausbildung kann sich, je nach Weite des Gefäßbodens bzw. des Gefäßes im Abstand von der Meßzone eine ausreichend tiefe Vertiefung für Restflüssigkeit ergeben, die in diesen Bereichen dann so hoch steht, daß ein sicherer Schutz vor Überhitzung der empfindlichen Geräteteile gegeben ist. Diese Vertiefung kann aber auch an ihrer der Meßzone zugekehrten und zweckmäßig im Abstand von der Beheizung liegenden Seite von einer abgesetzten Vertiefungsflanke begrenzt sein, so daß selbst verhältnismäßig geringe Flüssigkeitsmengen bereits zu einem relativ hohen Flüssigkeitsstand in der Vertiefung führen. Dies ist insbesondere zweckmäßig, wenn die Vertiefung mit ihrer von der Meßzone abgekehrten Seite im wesentlichen von der Innenfläche des Gefäßmantels begrenzt ist, wobei diese Innenfläche auch im Bereich der Vertiefung bzw. des Gefäßbodens etwa gleiche Weite wie in den übrigen, darüberliegenden Bereichen aufweisen kann.

Obwohl die erfindungsgemäße Ausbildung auch bei innerhalb des Gefäßraumes liegender oder in den Gefäßboden eingebetteter bzw. eingegossener Anordnung des Heizwiderstandes bzw. des Temperaturfühlers denkbar ist, ist es besonders zweckmäßig, wenn der Heizwiderstand und oder der Temperaturfühler außerhalb des Gefäßraumes liegen und an einer Außenseite des Gefäßbodens angeordnet sind. Sie liegen zweckmäßig so, daß sie überall Abstand vom Gefäßmantel haben und vorzugsweise auch nicht unmittelbar im Bereich der Vertiefung für die Restflüssigkeit vorgesehen sind, so daß diese Vertiefung keiner direkten Beheizung, sondern nur einer wärmeleitenden Beheizung über den Werkstoff des Gefäßbodens ausgesetzt ist und den Temperaturfühler allenfalls nur unwesentlich beeinflußt.

Bei Verwendung geeigneter Werkstoffe, beispielsweise als Verbundstoffe einteilig integrierbarer Werkstoffe, ist es durchaus vorstellbar, daß der Gefäßboden wenigstens mit dem anschließenden Teil des Gefäßmantels einen einteiligen Bauteil bildet. Besonders günstige Eigenschaften ergeben sich jedoch, wenn der Gefäßboden als in sich geschlossene, gesonderte Heiz-und Regelvorrichtung ausgebildet ist, die, je nach den Erfordernissen, in ein beliebiges Gefäß lös-bzw. auswechselbar oder unlösbar eingebaut werden kann. Der Gefäßmantel kann dadurch in einfacher Weise als im wesentlichen durchgehender Hülsenkörper aus Kunststoff o.dgl. ausge bildet werden, in welchen der Heizboden eingesetzt wird. Da ein zuverlässiger Schutz gegen Überhitzung durch die erfin dungsgemäße Ausbildung gegeben ist, braucht der Aufwand für eine auswechselbare Anordnung der Heizeinheit nicht vorgesehen werden. Der Gefäßboden kann aus einem Werkstoff mit gegenüber dem Gefäßmantel wesentlich besseren Wärmeleiteigenschaften, insbesondere aus einem metallischen Werkstoff, hergestellt werden und besteht z.B. bevorzugt aus rostfreiem Stahl, wie dies auch für den Mantel des Rohrheizkörpers gelten kann.

Insbesondere bei auswechselbarer Anordnung des Gefäßbodens, ggf. aber auch bei geklebter Befestigung, ergibt sich eine sehr einfache Montage ohne zusätzliche Sicherungsglieder, wie Schrauben o.dgl., wenn zwischen dem Gefäßboden und dem Gefäßmantel mindestens eine Verriegelung vorgesehen ist, von deren paarweise ineinandergreifenden Riegelgliedern jeweils eines einteilig mit dem Gefäßboden und eines einteilig mit dem Gefäßmantel ausgebildet ist. Die Verriegelung ist somit durch eine Relativbewegung zwischen dem Gefäßboden und dem Gefäßmantel einzurücken und ggf. auch wieder auszurücken, wobei die Richtung dieser Relativbewegung in der Regel von der zur Mittelachse des Gefäßmantels parallelen Richtung, also von derjenigen Richtung abweicht, in welcher diese beiden Bauteile bis zur gegenseitigen axialen und anschlagbegrenzten Ausrichtung zusammengeführt werden. Die Richtung der Verriegelungsbewegung liegt zweckmäßig quer bzw. annähernd rechtwinklig zur Mittelachse des Gefäßmantels bzw. etwa parallel zum Gefäßboden. Statt einer auch denkbaren linearen bzw. etwa radialen Verriegelungsbewegung ist vorteilhaft eine Drehbewegung beispielsweise etwa um die Mittelachse des Gefäßmantels vorgesehen, so daß die Verriegelungsglieder nach Art von Bajonettverschlußgliedern ausgebildet werden können. Die beschriebene Verriegelung zwischen Gefäßboden und Gefäßmantel ist auch bei anderen Gefäßen als den beschriebenen Elektro-Heizgefäßen in vorteilhafter Weise überall dort denkbar, wo ein Gefäßboden für die Zusammenfügung mit einem Gefäßmantel bestimmt ist.

Um eine besonders sichere Abstützung des Gefäßbodens gegenüber dem Gefäßmantel zu erzielen, sind vorteilhaft über den Umfang verteilte Stütz-bzw. Riegelnocken vorgesehen, die zweckmäßig aus dem Werkstoff des Gefäßmantels herausgeformt sind und an der Unterseite des Gefäßmantels anliegen. Dadurch ist auch im Falle geringer Leckagen stets wieder eine gute Austrocknung im Randbereich des Gefäßbodens an dessen Unterseite gewährleistet. Im Falle der Ausbildung einer durch eine Relativbewegung des Gefäßbodens einrückbaren Verriegelung weist der Randbereich des Gefäßbodens zweckmäßig zur Randkante hin offene Einführungsausschnitte auf, die in ihrer Lage und Größe möglichst genau bzw. eng an die Riegelnocken angepaßt und in Einbaulage von einer den Riegelnocken gegenüberliegenden, ringförmig geschlossenen Anlageschulter bzw. einer Ringdichtung überdeckt sind.

Damit der Gefäßboden, bezogen auf seine Mittelachse, nur in einer einzigen oder mehreren genau vorbestimmten Drehlagen in den Gefäßmantel etwa parallel zu dessen Mittelachse eingeführt werden kann, ist mindestens eine Längsführung vorgesehen, welche den Gefäßboden während des Einführens an Drehbewegungen gegenüber dem Gefäßmantel hindert. Im Falle des Vorsehens der durch eine Relativbewegung des Gefäßbodens einrückbaren Verriegelung kann diese Verdrehsicherung in einfacher Weise dadurch gebildet sein, daß die Riegelnocken über einen größeren Teil der Länge des Gefäßmantels, insbesondere annähernd bis zu dessen zugehörigen Stirnseite stegförmig verlängert sind, so daß die Einführungsöffnungen während des Einführvorganges bereits frühzeitig in Eingriff mit den dadurch gebildeten rippenförmigen Längsstegen gelangen.

Da der Gefäßboden wegen seiner direkten thermischen Beaufschlagung durch den Heizwiderstand sowie wegen seiner anderen Raumform ein gegenüber dem Gefäßmantel verschiedenes thermisches Ausdehnungsverhalten haben kann, ist es zweckmäßig, die Werkstoffe von Gefäßmantel und Gefäßboden so anein ander anzupassen, daß Dehnungsspannungen, die zu Beschädigungen, wie Rissen, führen könnten, vermieden sind. Die Werkstoffe können aber auch frei nach anderen Erfordernissen gewählt werden, wenn, insbesondere im Übergangsbereich zwischen dem Gefäßboden und dem Gefäßmantel oder in Nähe hierzu, Mittel zum Dehnungsausgleich vorgesehen sind, die in einfacher Weise durch Profilierungen bzw. Profile gebildet sein können, welche die unterschiedlichen Dehnungen auffangen.

Als Temperaturfühler kann ein Dehnstabfühler, ein Kapselfühler, ein Thermobimetallfühler oder ein ähnlicher Fühler verwendet werden. Ein besonders genaues Ansprechen des Meß-bzw. Temperaturfühlers wird erreicht, wenn dieser mit einer Ausdehnungsflüssigkeit gefüllt und/oder im wesentlichen rohrförmig derart ist, daß er mit einer annähernd über seine Länge reichenden Mantelzone großflächig wärmeleitend an den Gefäßboden anschließt. Der Temperaturfühler kann auch statt dessen oder zusätzlich hierzu über ein Wärmeleitelement im wesentlichen großflächig mit dem Gefäßboden verbunden sein, das seinerseits mit dem Gefäßboden zweckmäßig über eine größere Fläche wärmeleitend verbunden ist, als dies mit der hierfür bestimmten Oberfläche des Temperaturfühlers möglich wäre. Dadurch kann das Wärmeleitelement bzw. der Temperaturfühler bis sehr nahe bzw. direkt an den Heizwiderstand herangeführt werden, so daß der Temperaturfühler statt seiner direkten Verbindung mit dem Gefäßboden oder vorzugsweise zusätzlich hierzu praktisch in direkter wärmeleitender Verbindung mit dem Heizwiderstand steht und durch Überwachung von dessen Temperatur diesen direkt schützen kann.

Die beschriebene Heizgefäß-Beheizung kann auch zusätzlich zur erfindungsgemäßen Ausbildung entsprechend der EP-A-0 097 265 ausgebildet bzw. angeordnet sein, weshalb auf diese Druckschrift hier wegen weiterer Einzelheiten und Wirkungen Bezug genommen wird.

Diese und weitere Merkmale von bevorzugten Weiterbildungen der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können. Ausführungsbeispiele der Erfindung sind in den Zeichnungen dargestellt und werden im folgenden näher erläutert. In den Zeichnungen zeigen:

Fig. 1 eine erfindungsgemäße elektrische Heizvorrichtung im Axialschnitt,

Fig. 1a einen Abschnitt der Fig. 1 in vergrößerter Darstellung,

Fig. 2 die Heizvorrichtung gemäß Fig. 1 in Ansicht von unten und bei abgenommenem Bodendeckel,

Fig. 3 einen Ausschnitt der Fig. 1 in einer abgewandelten Ausführungsform und in vergrößerter Darstellung,

Fig. 4 bis 7 weitere Ausführungsformen in Darstellungen entsprechend Fig. 3,

Fig. 8 den Griff des Heizgefäßes in Ansicht von links gemäß Fig. 2,

Fig. 9 ein weiteres Ausführungsbeispiel eines Gefäßes im Axialschnitt, wobei lediglich der Gefäßmantel und der Gefäßboden gezeigt sind,

Fig. 10 den Gefäßmantel gemäß Fig. 9 in Ansicht von unten,

Fig. 11 einen Ausschnitt der Fig. 9 in vergrößerter Darstellung,

Fig. 12 ein weiteres Ausführungsbeispiel in einer Darstellung entsprechend Fig. 11,

Fig. 13 einen Ausschnitt einer weiteren Ausführungsform eines Gefäßbodens in Ansicht von unten, und

Fig. 14 der Gefäßboden gemäß Fig. 13 in Seitenansicht.

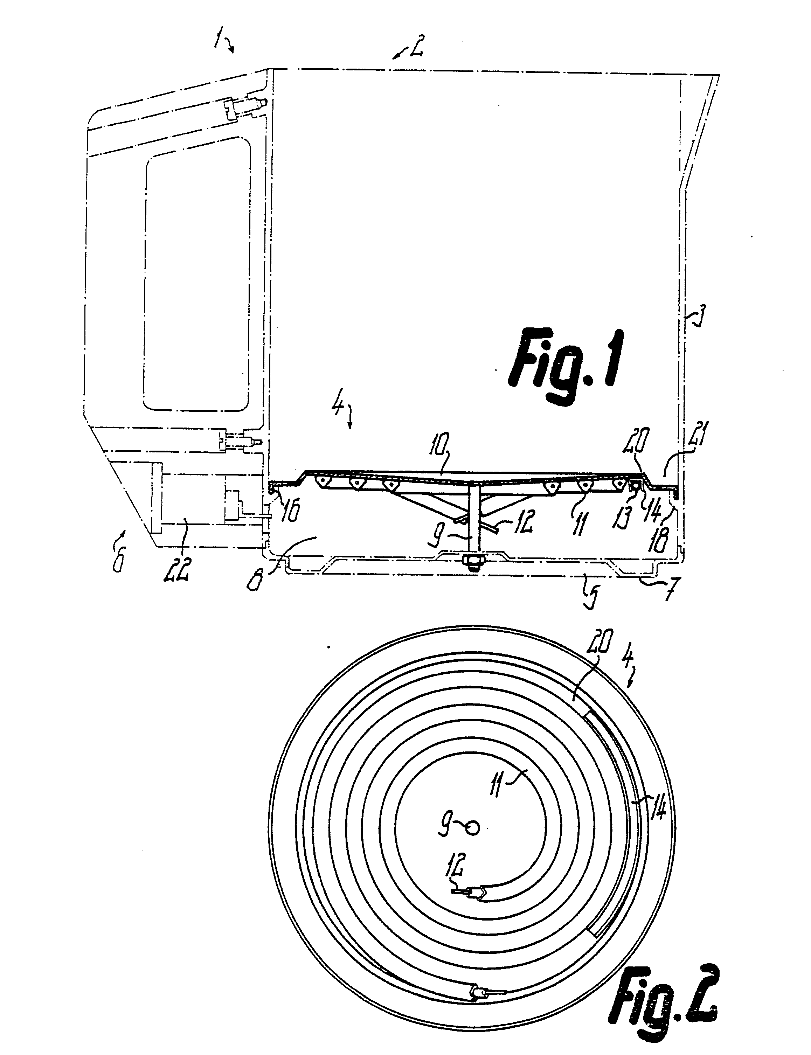

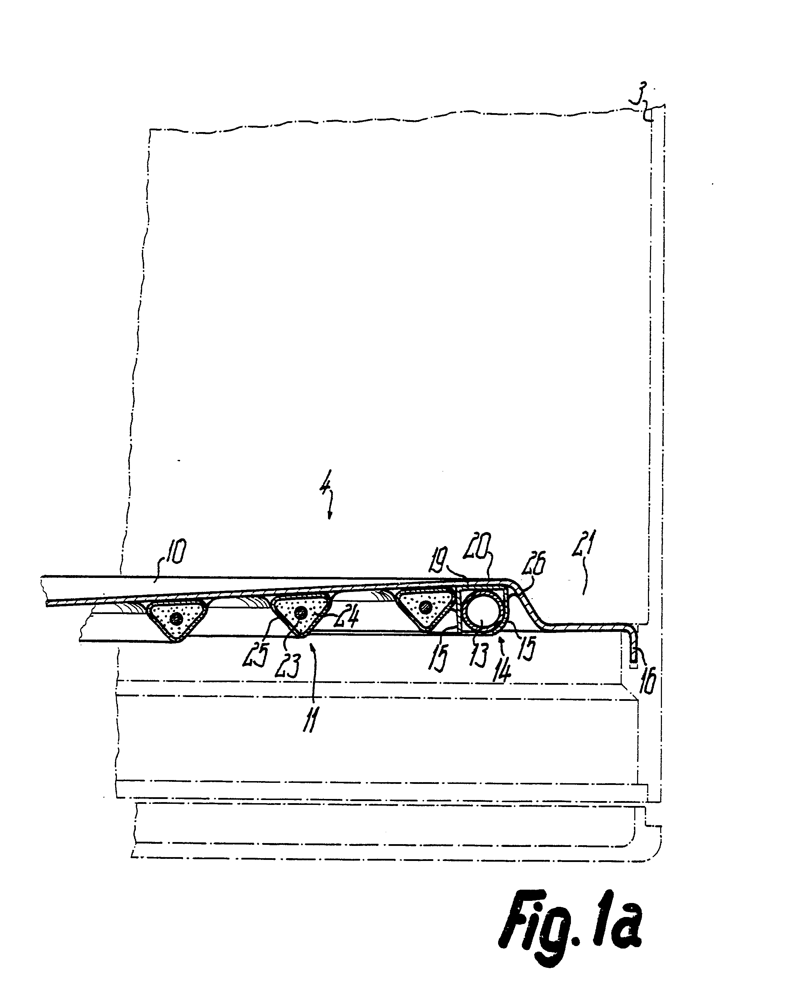

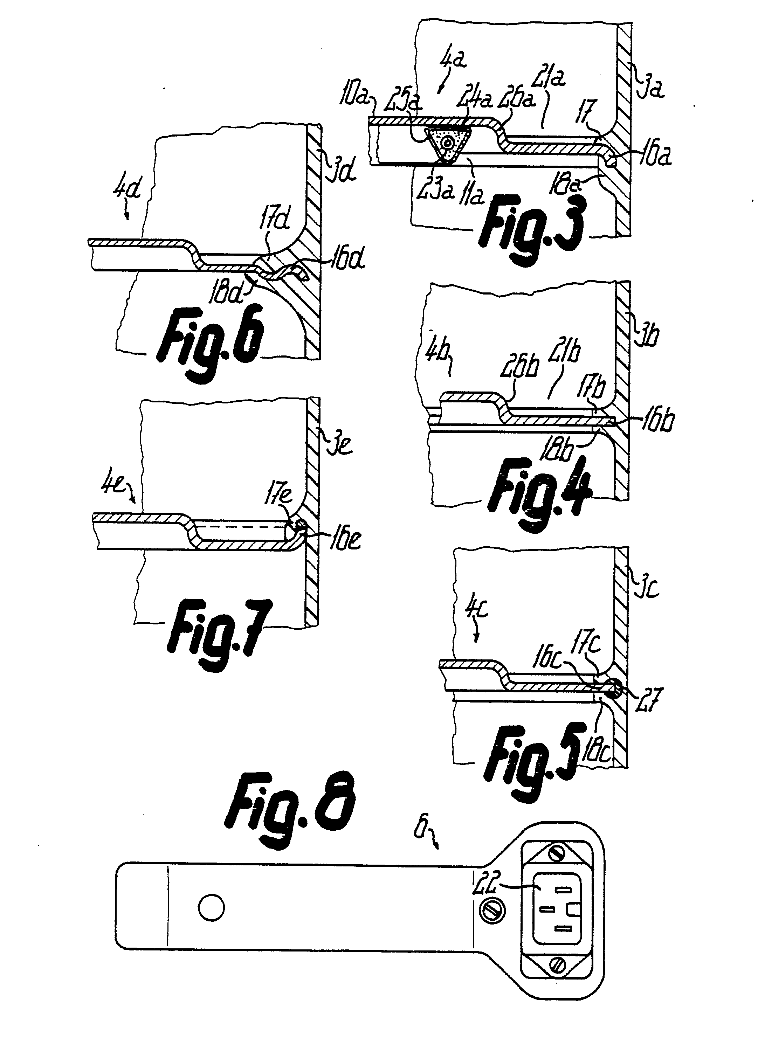

In den Fig. 1 und 2 ist eine elektrische Heizvorrichtung 1 in Form eines Elektro-Heizgefäßes bzw. eines Elektro-Wasserkochtopfes dargestellt, für welchen die erfindungsgemäße Ausbildung besonders geeignet ist.

Der Wasserkocher weist einen aus Kunststoff bestehenden, strichpunktiert angedeuteten Grundkörper 2 auf, welcher durch einen im wesentlichen über seine Länge regelmäßig durchgehenden, insbesondere annähernd zylindrischen Mantelkörper gebildet sein kann. Zwischen den Enden ist in diesen Mantelkörper abgedichtet ein im wesentlichen scheibenförmiger Gefäßboden 4 eingesetzt, dessen Abstand von der unteren Stirnfläche des Mantelkörpers größer als von dessen oberer Stirnfläche ist, wobei der Mantelkörper auch ab dem Gefäßboden 4 nach oben den Gefäßmantel 3 bildet.

Das untere, nach unten über den die eigentliche Heizungsvorrichtung bildenden Gefäßboden 4 vorstehende Ende des Mantelkörpers ist mit einem zweckmäßig ebenfalls aus Kunststoff, ggf. aber auch aus Blech bestehenden, napfförmigen Boden deckel 5 verschlossen, dessen unten liegende, zum Gefäßboden 4 im wesentlichen parallele Stirnwand in so großem Abstand unterhalb des Gefäßbodens 4 vorgesehen ist, daß ein freier Raum 8 als Belüftungs-, Isolier-und elektrischer Anschlußraum gebildet ist, dessen lichte Weite nahezu gleich derjenigen des Gefäßmantels 3 ist. Der Bodendeckel 5 bildet mit einem ringförmigen Vorsprung die Standfläche 7 des Heizgefäßes.

An einer einer Ausgießschnauze gegenüberliegenden Außenseite des Mantelkörpers ist zur leicht tragbaren Ausbildung des Heizgefäßes ein annähernd über dessen ganze Höhe reichender Gefäßgriff 6 aus Kunststoff lös-bzw. auswechselbar befestigt. Unten weist der Gefäßgriff 6 einen versenkt angeordneten, von außen mit einer entsprechenden elektrischen Gegenkupplung zugänglichen Anschlußstecker auf, der durch eine unterhalb des Gefäßbodens 4 liegende Öffnung im Mantelkörper von dem freien Raum 8 her für die Verlegung der elektrischen Anschlußleitungen zugänglich ist.

Der Behälterboden 4 bildet eine in sich geschlossene elektrische Heiz-und Temperatur-Regeleinheit, die im wesentlichen aus einer über den größten Teil ihrer Erstreckung annähernd ebenen Bodenplatte 10 aus Blech, einem an deren Unterseite direkt befestigten Heizwiderstand 11 in Form eines spiralig verlegten Rohrheizkörpers mit Anschlußenden 12 und einem Temperaturfühler 13 bestehen kann, welcher mit einem gut wärmeleitenden Tragprofil 14 direkt an der Unterseite der Bodenplatte 10 befestigt und über eine Kapillarleitung mit einem nicht näher dargestellten, einstellbaren Temperaturregler an der Außenseite der Heizvorrichtung verbunden ist.

Die Bodenplatte 10 weist einen nach unten zu einem verhältnismäßig niedrigen Mantel abgewinkelten Rand bzw. Randbereich auf, dessen Außenseite etwa gleich der Innenweite des Gefäßmantels 3 ist und der im Querschnitt im wesentlichen rechtwinklig in die Stirnwand der Bodenplatte 10 übergeht, so daß dieser Randbereich 16 durch Anlage seines Außenumfanges an der Innenfläche des Mantelkörpers die Bodenplatte 10 koaxial gegenüber dem Grundkörper 2 ausrichten kann. Zur axialen Ausrichtung liegt an der Unterseite der Bodenplatte 10 in einer unmittelbar an den abgewinkelten Randbereich 16 anschließenden Ringzone eine Ringrippe 18 an, die radial nach innen über den Innenumfang des Gefäßmantels 3 über den Umfang mit kontinuierlichen Querschnitten vorsteht und einteilig mit dem zugehörigen Bereich des Gefäßmantels 3 ausgebildet ist. Die im Querschnitt winkelförmige Ringrippe 18 liegt mit der Oberseite ihres nach oben gerichteten Winkelschenkels ganzflächig an der Unterseite der Bodenplatte 10 an. Zur Lagesicherung des Bodendeckels 5 und/oder des Gefäßbodens 4 kann im Zentrum an der Unterseite des Gefäßbodens ein Stehbolzen beispielsweise durch Schweißung befestigt sein, welcher den Bodendeckel durchsetzt. Der Gefäßboden kann von der offenen Oberseite des Gefäßmantels her in seine Montagelage eingesetzt werden.

Die Höhe des abgewinkelten Randbereiches 16 kann etwa an die Querschnittshöhe des Heizwiderstandes 11 angepaßt sein, der im dargestellten Ausführungsbeispiel in einem einzigen Heizkreis vorgesehen bzw. durch einen einzigen einteiligen Rohrheizkörper gebildet ist. Zur guten Wärmeübertragung weist der Rohrheizkörper im Querschnitt eine im wesentlichen ebene Fläche auf, die mit der Unterseite der Bodenplatte 10 verlötet ist; der Rohrheizkörper kann beispielsweise einen halbkreisförmigen oder, wie dargestellt, einen dreieckigen Querschnitt haben, dessen größte ebene Seite der Bodenplatte 10 zugekehrt und ganzflächig metallisch mit dieser verbunden ist. Diese Fläche wird durch Verpressen des fertigen Rohrheizkörpers erzeugt und ist auch für den Rohrheizkörper im übrigen sehr vorteilhaft, weil dadurch eine zusätzliche Verdichtung erfolgt. Der Rohrheizkörper ist ebenso wie das Tragprofil 14 unmittelbar auf die untere, im wesentlichen ebene Oberfläche der Bodenplatte 10 aufgelötet, wobei die Auflötung mittels eines hochtemperaturfesten Lotes für rostfreien Stahl, vorzugsweise eines Nickel-Pastenlotes, beispielsweise in einem Lötofen, erfolgt. Diese hier generell als Lötung bezeichnete Verbindungsmethode ist keine Lötung im herkömmlichen Sinne, weil das verwendete Lot durch Eindiffundieren in das Grundmaterial und durch ähnliche Materialzusammensetzung eine so innige Verbindung mit der Bodenplatte 10 und dem befestigten Teil eingeht, daß kaum noch eine thermische Trennung der verlöteten Teile möglich ist; man kann die Verbindung daher auch als Anlegierung bezeichnen.

In Ansicht auf die Oberseite der Bodenplatte 10 hat die äußerste Begrenzung des Heizwiderstandes 11 über den gesamten Umfang einen Radialabstand von derjenigen engsten Innenbegrenzung des Grundkörpers 2 bzw. des Gefäßmantels 3, die dieser im Bereich des Gefäßbodens 4 aufweist und die im dargestellten Ausführungsbeispiel durch die radial innere Begrenzung der Ringrippe 18 gebildet ist. Dieser Abstand ist größer als die größte Querschnittsweite des Rohrheizkörpers und kann dadurch erreicht werden, daß der Außendurchmesser der äußersten Windung dieses Rohrheizkörpers entsprechend kleiner als der Innendurchmesser der Ringrippe 18 ist. Der Abstand zwischen benachbarten und etwa äquidistant nebeneinander verlaufenden Abschnitten des Rohrheizkörpers kann etwa gleich groß wie dessen größte Querschnittsweite sein. Die beiden außen- und innenliegenden Anschlußenden 12 des Heizwiderstandes 11 sind schräg nach unten in den Raum 8 hineinragend abgewinkelt.

Der Temperaturfühler 13 liegt im Bereich einer eng an die Beheizung wärmegekoppelten Meßzone 20, die höher als benachbarte Bereiche des Gefäßbodens liegt, insbesondere dessen höchste, von der Flüssigkeit beaufschlagte Stelle bildet und von der vorzugsweise durch entsprechende Formgebung des Gefäßbodens gebildete Fließstrecken für die Flüssigkeit zu mindestens einer tiefer liegenden Zone führen, die insbesondere über den Umfang durchgegehend an die Innenseite des Gefäßmantels, also an denjenigen Randkranz des Gefäßbodens anschließt, welcher im Gefäßinneren für den Übergang in den Gefäßmantel bestimmt ist. Dadurch wird die bei noch nicht eingebautem Gefäßboden zunächst nur an einer Flanke begrenzte Vertiefung dann an der anderen Flanke vom Gefäßmantel begrenzt. Eventuell für den Eingriff bzw. die Einbettung in den Gefäßmantel bestimmte Teile des Randes des Gefäßbodens können daher auch höher als die Meßzone liegen.

Es ist denkbar, die Meßzone etwa im Zentrum des Gefäßbodens dadurch vorzusehen, daß der Gefäßboden von dieser Meßzone nach allen Richtungen unter wenigen Winkelgraden abfällt und eine Vertiefung bildet, die mit zunehmender Annäherung an den Gefäßmantel tiefer wird. Dadurch bildet sich jedoch im Bereich der Vertiefung eine verhältnismäßig große Verdampfungs-Oberfläche für die Restflüssigkeit im Vergleich zu deren Tiefe. Insofern ist ein Querschnitt der Vertiefung 21 vorzuziehen, wie er in den Fig. 1 und 1a dargestellt ist, und dessen Tiefe mindestens ein Viertel, insbesondere mindestens ein Drittel bis die Hälfte seiner Breite entspricht. Die Vertiefung 21 geht nach Art einer Ringrinne über den Umfang ununterbrochen durch, weist eine im wesentlichen ebene oder allenfalls nach außen abfallende Bodenfläche und zur Begrenzung an der Innenseite eine verhältnismäßig steil geneigte Flanke 26 auf, die durch eine entsprechend kegelstumpfförmig nach oben verjüngte Ringzone der Bodenplatte 10 gebildet ist.

Die Flanke 26 geht nach Art einer Gratflanke in die höchste, ringförmige Begrenzung der Meßzone 20 über, die von dieser Begrenzung zur anderen Flankenseite, also zum Zentrum des Gefäßbodens flach unter wenigen Winkelgraden abfällt, so daß sich über die Breite der Meßzone 20 nur äußerst geringe Höhenunterschiede der Bodenplatte ergeben und diese Höhenunterschiede bis zum Zentrum der Bodenplatte zunehmen. An der radial äußeren Seite schließt der Boden der Vertiefung 21 unmittelbar an den Randbereich 16 an, der beispielsweise durch Einkleben in die durch die Ringrippe 18 gebildete Ringnut befestigt sein kann.

Die Bodenplatte 10 kann von der Meßzone 20 bis zum Zentrum somit flach kegelförmig ausgebildet sein und dadurch innerhalb der Meßzone 20 eine flachschalenförmige Vertiefung für Restflüssigkeit bilden, die beispielsweise etwa gleiche Tiefe wie die Vertiefung 21 hat.

Der Heizwiderstand 11 und der rohrförmige Temperaturfühler 13 sind ausschließlich in dem innerhalb der Vertiefung 21 liegenden Bereich der Bodenplatte 10 derart vorgesehen, daß vom Heizwiderstand 11 zur Vertiefung 21 und von dieser zum Temperaturfühler 13 jeweils keine bzw. nur eine möglichst geringe Wärmekoppelung besteht. Der Temperaturfühler 13 ist dagegen thermisch möglichst eng an die Meßzone 20 bzw. deren höchste Begrenzung gekoppelt, wobei er bzw. sein Tragprofil 14 jedoch gegenüber der Flanke 26 im Abstand liegt, beispielsweise derart, daß das Tragprofil 14 bzw. seine Verlötung gerade bis an den Übergang der Flanke 26 in die Meßzone 20 reicht. Der Temperaturfühler 13 liegt an der Außenumfangsseite der zugehörigen äußersten Windung des Heizwiderstandes 11, wobei es denkbar ist, daß dieser Abschnitt des Heizwiderstandes 11 so im Abstand zum Temperaturfühler 13 vorgesehen ist, daß er diesen nur über Wärmestrahlung beeinflußt.

Besonders zweckmäßig ist es jedoch, wenn dieser Abschnitt des Heizwiderstandes 11 durch unmittelbare metallische Verbindung wärmeleitend mit dem Temperaturfühler 13 bzw. dem Tragprofil 14 verbunden ist, wobei das Tragprofil 14 im dargestellten Ausführungsbeispiel an dem Außenumfang des zugehörigen Abschnittes des Heizwiderstandes 11 im wesentlichen anliegt. Dieser Abschnitt des Heizwiderstandes 11 ist außerdem über die zugehörige Ringzone der Bodenplatte 10 wärmeleitend mit der Meßzone 20 und damit mit dem Temperaturfühler 13 verbunden.

Durch die beschriebene Ausbildung liegt der an die Meßzone 20 anschließende, vom zugehörigen Abschnitt des Heizwiderstandes 11 unmittelbar beheizte Bereich der Bodenplatte 10 höher als alle übrigen beheizten Bereiche, so daß er beim Verdampfen der Flüssigkeit vor diesen etwa gleichzeitig mit der Meßzone 20 trocken geht und somit seine Leistung überwiegend bzw. fast nur an den Temperaturfühler 13 abgibt. Alle übrigen beheizten Zonen der Bodenplatte 10 liegen dabei noch unter Flüssigkeit, so daß die zugehörigen Abschnitte des Heizwiderstandes 11 durch Abkühlung keiner so großen Belastung ausgesetzt sind. Mit zunehmender Verdampfung der Flüssigkeit in der zentralen schalenförmigen Vertiefung geht jedoch ein zunehmend größerer Teil des beheizten Bereiches trocken, so daß immer mehr Abschnitte des Heizwiderstandes 11 über die Wärmekoppelung durch die Bodenplatte 10 ungekühlt auf die Meßzone 20 wirken und dadurch die relative Einschaltdauer des Heizwiderstandes 11 über den Temperaturfühler 13 und den Temperaturregler selbst bei höchster Temperatur-bzw. Leistungseinstellung immer weiter verringert wird.

In diesem sogenannten Leerlauf kann die relative Einschaltdauer auf etwa 3 % in der Art reduziert werden, daß der Gefäßboden nur noch warmgehalten wird, also eine Temperatur weit unter 100° nicht mehr übersteigt. Dadurch sowie durch die in der Vertiefung 21 noch befindliche Restflüssigkeitsmenge kann der Gefäßmantel 3 vor thermischen Schäden selbst dann geschützt werden, wenn er aus thermisch relativ labilem Werkstoff besteht.

Um den Temperaturfühler 13 einerseits einfach und andererseits in enger thermischer Koppelung befestigen zu können, ist das Tragprofil 14 vorgesehen, das mit der Außenseite eines Profilsteges 19 ganzflächig an der Meßzone 20 bzw. der Bodenplatte 10 befestigt ist. Das aus gut wärmeleitfähigem metallischem Werkstoff bestehende Tragprofil 14 weist mindestens einen, insbesondere zwei einander gegenüberliegende, von der Meßzone 20 im wesentlichen frei abstehende Profilschenkel 15 auf, die den Temperaturfühler 13 gemeinsam mit dem Profilsteg 19 annähernd über seinen gesamten Umfang umgeben und mindestens teilweise eng an diesem Außenumfang anliegen.

Die Profilschenkel 15 des U-profilförmigen Tragprofiles 14 können nach dem Einlegen des um die Mittelachse des Gefäßbodens gekrümmten Temperaturfühlers 13 gegen dessen Außenumfang gebogen werden. In Fig. 1a ist der rechte Profilschenkel 15 in gebogenem und der linke Profilschenkel in nicht gebogenem Zustand dargestellt. Durch Aufbiegen des jeweiligen Profilschenkels 15 läßt sich der Temperaturfühler 13 leicht auswechseln. Zweckmäßig reicht das Tragprofil zur Verbesserung der Wärmekopplung auch wenigstens annähernd über die gesamte Länge des Temperaturfühlers 13, der somit über seine gesamte Länge unter Vermittlung des Tragprofiles 14 gleichmäßig thermisch an die Meßzone 20 angekoppelt ist.

Die zum Heizwiderstand hin liegende Profilseite des Tragprofiles 14 kann unmittelbar über das Lötmittel mit dem zugehörigen Abschnitt des Heizwiderstandes 11 thermisch gekoppelt sein. Statt des entlang einer Längsseite offenen Tragprofiles ist auch ein rohrförmiges Tragprofil denkbar, in welches der Temperaturfühler in seiner Längsrichtung einzuschieben ist. Besonders zweckmäßig ist es jedoch, wenn das Tragprofil 14 mit einem Profilsteg 19 des Tragprofiles 14 ganzflächig im Bereich der Meßzone 20 befestigt ist, dessen Breite wenigstens annähernd so groß wie der Durchmesser des aus metallischem Werkstoff bestehenden Temperaturfühlers 13 ist.

Wie Fig. 1a ferner zeigt, weist der als Rohrheizkörper ausgebildete Heizwiderstand 11 im Zentrum einen Widerstandsdraht 23 auf, welcher in eine verpreßte Isoliermasse 24 so eingebettet ist, daß er gegenüber einem rohrförmigen und mit der Isoliermasse 24 verfüllten Außenmantel 25 berührungsfrei ist. Der Querschnitt des Außenmantels 25 ist im dargestellten Ausführungsbeispiel im wesentlichen gleichschenklig dreieckig, wobei der Außenmantel 25 mit der Außenseite seines Basisschenkels in der beschriebenen Weise an der Unterseite der Bodenplatte 10 ganzflächig befestigt ist. Durch die beschriebene Ausbildung bildet der Heizwiderstand eine flachkegelstumpfförmige Spirale mit einer Wendelsteigung, die dem Kegelwinkel des zentralen Teiles der Bodenplatte 10 entspricht.

Durch die leicht gewölbte Form der Bodenplatte 10 sowie durch deren relativ geringe Plattendicke kann sich auch ein Dehnungsausgleich zwischen dem Gefäßboden 4 und dem Gefäßmantel 3 bei unterschiedlichem Ausdehnungsverhalten ergeben, da die Wölbung bei größerer Dehnung des Gefäßbodens 4 in Wölbungsrichtung geringfügig elastisch nach unten oder oben ausweichen kann. Durch eventuell auftretende Verformungen wird jedoch die Meßzone 20 gegenüber den übrigen Bodenbereichen praktisch nicht abgesenkt, sondern ggf. eher angehoben, so daß die erfindungsgemäßen Wirkungen selbst dann voll erhalten bleiben, wenn der Höhenunterschied zwischen der Meßzone 20 und der tiefsten Stelle der Restflüssigkeits-Vertiefung nur sehr gering ist. Der hohle Raum 8 kann ggf. auch wenigstens teilweise mit Isoliermaterial und/oder mit mindestens einem gegen die Unterseite des Gefäßbodens 4 gerichteten Wärmereflektor versehen sein.

Der Gefäßgriff 6 trägt den Stecker 22 vollständig versenkt in einem unterhalb eines aufrechten Griffbügels liegenden verbreiterten Abschnitt, der auf der vom Griffbügel abgekehrten Seite der unteren Befestigungsschraube vorgesehen ist. Die in die einteilig mit dem Grundkörper 2 ausgebildeten Zapfen eingreifenden Befestigungsschrauben liegen vollständig versenkt innerhalb des Gefäßgriffes 6.

In den Fig. 3 bis 7 und 10 bis 12 sind für einander entsprechende Teile die gleichen Bezugszeichen wie in den übrigen Figuren, jedoch mit unterschiedlichen Buchstabenindizes verwendet.

Gemäß Fig. 3 ist die ringförmige Restflüssigkeits-Rinne 21a in diesem Ausführungsbeispiel annähernd U-förmig dadurch begrenzt, daß die Bodenplatte 10a einen zentralen, über den größten Teil ihrer Gesamtweite reichenden höherliegenden Abschnitt aufweist, der nahe benachbart zum Gefäßmantel 3a über eine zweifache, kröpfungsartig entgegengesetzte Abwinklung, also über eine, die radial innere Flanke 26a der Rinne 21a bildende mantelförmige Ringzone in den ringscheibenförmigen Bodenteil der Rinne 21a übergeht. Der erhöhte Abschnitt kann über seine gesamte Erstreckung im wesentlichen eben ausgebildet und horizontal angeordnet sein oder er kann von der ggf. zentralen Meßzone nach allen Richtungen im wesentlichen gleichmäßig abfallen. Der äußere abgewinkelte, von dem Bodenteil der Rinne 21a nach unten abstehende, ringförmige Randbereich 16a ist durch Einspritzen in den Gefäßmantel 3a derart eingebettet, daß der Bodenteil der Rinne 21 nicht nur an der Unterseite von der Rippe 18a, sondern auch an der Oberseite von einer ringförmig nach innen vorspringenden Rippe 17 übergriffen ist. Die Rippe 18a übergreift den Randbereich 16a auch an der Innenseite bis zur Unterseite des Bodenteiles der Rinne 21a, wobei der gegenüberliegende Ringmantel bzw. die Fläche 26 oberhalb des Randbereiches 16a liegt. Die Breite der Rinne 21a kann, je nach Tiefe, etwa zwischen einem Dreißigstel und einem Viertel, insbesondere zwischen einem Achtel und einem Zwanzigstel der Weite bzw. des Durchmessers des Gefäßbodens betragen und liegt bevorzugt in der Größenordnung von einem Zwölftel dieses Maßes.

Im Fall der Ausführungsform nach Fig. 4 ist der Randbereich 16b ringscheibenförmig und als ebene Fortsetzung des Bodenteiles der Rinne 21b ausgebildet, so daß Rippen 17b, 18b von relativ geringer Rippendicke bzw. von einer Rippendicke verwendet werden können, die kleiner als die Wandungsdicke des Gefäßmantels 3b ist. Die äußere Begrenzung des Randbereiches 16b reicht etwa bis an die Hüllfläche der Innenseite des Gefäßmantels 3b. Der plane Randbereich 16b läßt sich besonders einfach herstellen.

Bei der Ausführungsform nach Fig. 5 ist in einen entsprechenden, beispielsweise im Querschnitt annähernd kreisrunden Ringkanal des Gefäßmantels 3c eine zwischen den Rippen 17c, 18c in der Innennut liegende, ringförmige Dichtung 27 eingesetzt, die am Innenumfang eine Aufnahmenut für den Randbereich 16c aufweisen kann. Die aus Gummi oder einem Werkstoff mit ähnlichen elastischen Eigenschaften bestehende Dichtung 27c gewährleistet eine besonders gute Abdichtung der Verbindung zwischen der durch den Gefäßboden 4 gebildeten Heizplatine und dem Gefäßmantel 3c und trägt auch zu einem sehr guten Dehnungsausgleich bei. Der Randbereich 16c ist praktisch in eine innere Ringnut des Gefäßmantels 3c eingesetzt.

Bei der Ausführungsform gemäß Fig. 6 ist der Randbereich 16d an seiner Oberseite und an seiner Unterseite mit mehreren Rillenprofilierungen, nämlich über seinen Umfang durchgehenden ringförmigen Profilierungen versehen, die zweckmäßig durch im Querschnitt beispielsweise S-förmig gewellte Aus bildung des Randbereiches 16d gebildet sind. Der so profilierte Randbereich 16d ist zwischen den Rippen 17d, 18d in den Gefäßmantel 3d eingebettet.

Bei der Ausführungsform nach Fig. 7 ist der Randbereich 16e ringförmig nach oben abgewinkelt. Der Gefäßmantel 3e bildet eine Steck-bzw. Aufnahmenut für den Randbereich 16e, die im wesentlichen in einer Axialnut des Gefäßbodens 4e, nämlich nach unten offen und außen von der Innenfläche des Gefäßmantels 3e sowie innen von der Innenfläche der im Querschnitt annähernd hakenförmigen Rippe 17e begrenzt ist. Der Gefäßboden 4e kann lösbar in der Aufnahmenut, ggf. unter Zwischenlage einer Dichtung, gesichert werden oder er kann durch Füllen der Aufnahmenut mit Klebstoff oder einem ähnlichen, aushärtenden Werkstoff befestigt werden.

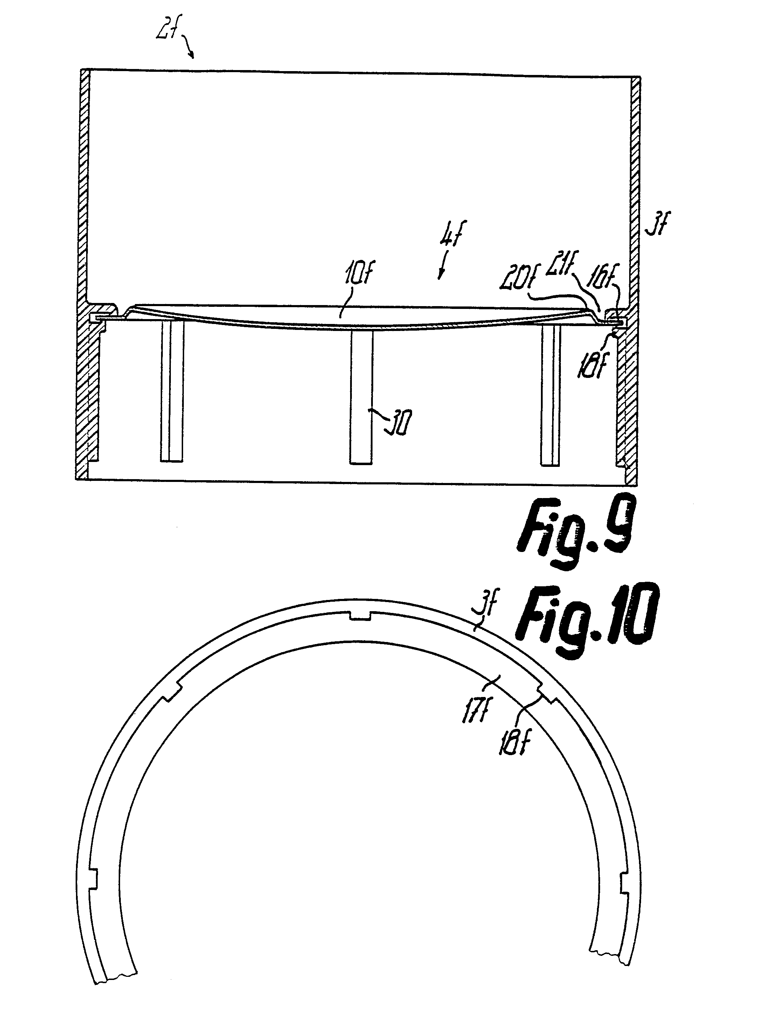

Bei der Ausführungsform nach den Fig. 9 bis 11 ist die Bodenplatte 10f des Gefäßbodens 4f konkav bzw. kugelkalottenförmig flachschalenartig gekrümmt und die Rinne 21f weist eine gegenüber ihrer Tiefe kleinere Breite auf, wobei sie im Querschnitt nahezu V-förmig sein kann.

Der Gefäßboden 4f ist mit einer bajonettverschlußartigen Verriegelung 28 an dem Gefäßmantel 3f befestigt. Zu diesem Zweck weist der Gefäßmantel 3f oberhalb des ringscheibenförmig in einer einzigen Ebene liegenden Randbereiches 16f einen im Querschnitt im wesentlichen winkelförmigen Ringbund 17f auf, dessen nach unten vorstehender Endschenkel eine im Abstand zur Innenfläche des Gefäßmantels 3f liegende, durchgehend ringförmig ebene Anlageschulter 31 31 für die Oberseite des Randbereiches 16f sowie mit seiner im Querschnitt konvex gekrümmten, radial inneren Ringkante die äußere Seitenbegrenzung der Rinne 21f bildet. Statt eines über den Umfang durchgehenden Ringbundes auch für die Unterseite des Randbereiches 16f sind mehrere, im dargestellten Ausführungsbeispiel 8 gleichmäßig über den Umfang verteilte, im Querschnitt winkelförmige Riegelnocken 18f vorgesehen, deren gegen den Ringbund 17f bzw. die Anlageschulter 31 gerichtete Winkelschenkel für die Anlage an der Unterseite des Randbereiches 16f derart vorgesehen sind, daß sie gegenüber der radial inneren Ringkante des Ringbundes 17f bzw. gegenüber der radial äußeren Begrenzung der Anlageschulter 31 geringfügig radial nach außen versetzt sind. Die radial weiter außen liegende Innenkante dieser Winkelschenkel der Riegelnocken 18f ist gegenüber der äußeren Umfangskante des Randbereiches 16f radial nach innen versetzt, wobei jeder dieser Winkelschenkel mit seiner Endfläche unter Vorspannung an der Unterseite des Randbereiches 16f. ggf. unter geringfügig federnder Biegeverformung dieses Randbereiches 16f und/oder des Ringbundes 17f anliegt.

Der Randbereich 16f weist am Außenumfang für jeden Riegelnocken 18f einen Einführungsausschnitt 29 auf, dessen Breite nur um das notwendige Einführungsspiel größer als die Breite des Riegelnockens 18f ist, dessen Bodenfläche ebenfalls nur um das notwendige Einführungsspiel gegenüber der radial inneren Flanke des Riegelnockens 18f versetzt ist und der bis zur äußeren Umfangskante des Randbereiches 16f reicht. Durch Vorsehen unterschiedlich breiter Riegelnocken 18f und Einführungsausschnitte 29 bzw. durch ungleichmäßige Verteilung der Riegelnocken 18f über den Umfang kann die Anordnung so getroffen werden, daß der Gefäßboden 4f nur in einer vorbestimmten relativen Drehlage gegenüber dem Gefäßmantel 3f und somit nur in einer einzigen richtigen Stellung eingesetzt werden kann. Jeder Riegelnocken 18f weist an mindestens einer Seitenfläche eine ansteigende Einführschräge 31 für den Randbereich 16f auf, wobei diese Einführschräge statt dessen oder zusätzlich hierzu auch seitlich an mindestens einer Seite des jeweiligen Einführungsausschnittes 29 anschließen kann.

Die Riegelnocken 18f sind in Richtung zur unteren Stirnseite des Gefäßmantels 3f unter Bildung rippenförmiger Längsstege 30 verlängert. Die zum Gefäßmantel 3f achsparallelen oder ggf. in Richtung der Verriegelungs-Drehbewegung des Gefäßbodens 4f schräg ansteigenden Längsstege 30 haben etwa gleiche Breite wie der jeweils zugehörige Riegelnocken 18f und enden in einem Abstand von der unteren Stirnfläche des Gefäßmantels 3f, der etwa ihrer Breite entspricht, so daß über den Umfang verteilte Schulterflächen für die Anlage eines unteren Gehäuse-bzw. Bodendeckels gebildet sind.

Der Ringbund 17f begrenzt an seiner dem Randbereich 16f zugehörigen Seite eine flache, über die Umfangskante des Randbereiches 16f radial hinausreichende Ringnut und die Riegelnocken 18f begrenzen entsprechende, dem Ringbund 17f zugekehrte, jedoch schmalere Teilringnuten. Die Ringnut und die Teilringnuten bilden jeweils eine im Querschnitt annähernd winkelförmige Nut für die Aufnahme der im Querschnitt annähernd U-förmigen Ringdichtung 27f, deren radial nach innen gerichtete Profilschenkel unterschiedlich hoch sind und einerseits die Ringnut sowie andererseits die Teilringnuten unter Vorspannung im wesentlichen voll ausfüllen. Zwischen die Schenkel der Ringdichtung 27f greift der Randbereich 16f auf einer Tiefe ein, die zumindest gegenüber einem der Profilschenkel größer als die Tiefe der Einführungsausschnitte 29 ist. Im dargestellten Ausführungsbeispiel übergreift der dem Ringbund 17f zugehörige Profilschenkel der Ringdichtung 27f den Randbereich 16f über die Bodenflächen der Einführungsausschnitte 29 hinaus. Die Umfangskante des Randbereiches 16f liegt zweckmäßig mit Pressung am Profilquersteg der Ringdichtung 27f an.

Zum Einsetzen des Gefäßbodens 4f wird dieser mit seinen Einführungsausschnitten 29 entlang der Längsstege 30 eingeführt, bis er an der Anlageschulter 31 anliegt und den kürzeren bzw. unteren Profilschenkel der Ringdichtung 27f übersprungen hat. Dann wird durch eine Drehbewegung des Gefäßbodens 4f um seine Mittelachse der Randbereich 16f so gegenüber den Riegelnocken 18f verdreht, daß die Einführungsausschnitte 29 mindestens um ihre Breite bzw. um mehr als die Breite der Riegelnocken 18f gegenüber letzteren versetzt liegen, wonach der Gefäßboden 4f in seiner abgedichteten Montagelage gesichert ist. Durch eine entsprechend entgegengesetzte bzw. weitergeführte Drehbewegung können die Einführungsausschnitte 29 wieder in Ausrichtung gegenüber den Riegelnocken 18f gebracht werden, wonach der Gefäßboden 4f als Ganzes wieder vom Gefäßmantel 3f gelöst werden kann.

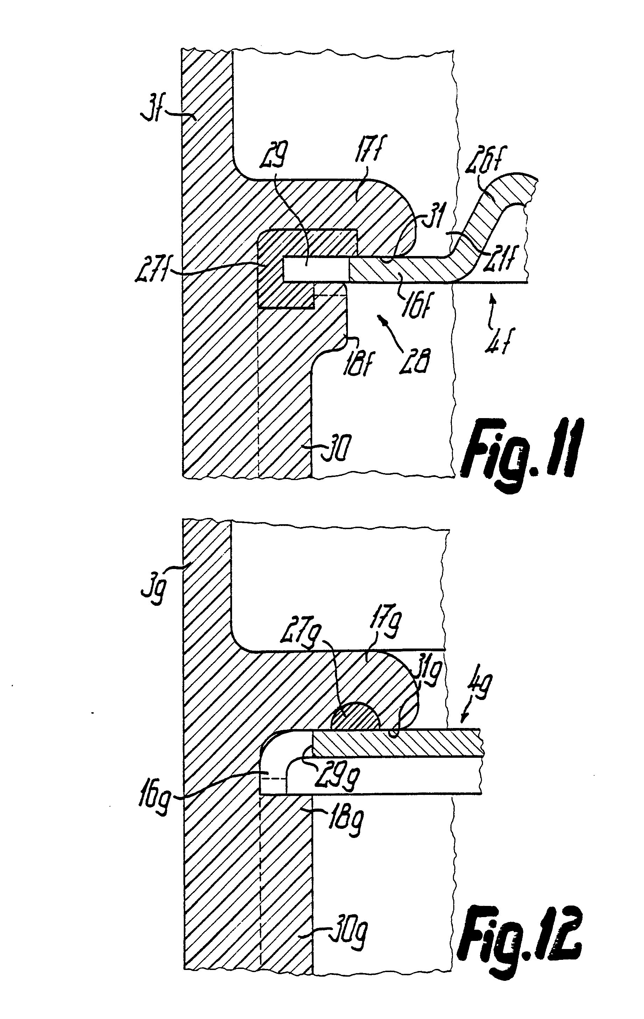

Während bei der Ausführungsform nach Fig. 11 die Riegelnocken 18f radial nach innen geringfügig über die Längsstege 30 vorstehen, haben sie bei der Ausführungsform nach Fig. 12 gemeinsame, bzw. im Querschnitt geradlinig durchgehende radial innere Begrenzungskanten, derart, daß der jeweilige Riegelnocken 18g unmittelbar durch das obere Ende des zugehörigen Längssteges 30g gebildet ist. Der Randbereich 16g ist bei der Ausführungsform nach Fig. 12 ähnlich wie bei derjenigen nach Fig. 3 im Querschnitt abbgewinkelt ausgebildet, so daß er mit seiner nach unten weisenden Stirnkante unter Vorspannung auf den oberen Endflächen der Riegelnocken 18g abgestützt werden kann. Mit seiner oberen, ringscheibenförmig ebenen Stirnfläche liegt der Randbereich 16g im Anschluß an den abgewinkelten Teil an der Anlageschulter 31g des Ringbundes 17g beiderseits einer Ringnut an, die die beispielsweise nach Art einer U-Dichtung ausgebildete Ringdichtung 27g aufnimmt und im Querschnitt zweckmäßig etwa halbkreisförmig ist. Diese Ringnut bzw. die Ringdichtung 27g ist gegenüber den Bodenflächen der Einführungsausschnitte 29g radial nach innen versetzt.

Die erfindungsgemäße Ausbildung, bei welcher für die Kochend-Wasser-Bereitung eine metallische Heizplatine unmittelbar mit einem Gehäuse aus Kunststoff verbunden ist, war bisher nicht möglich, da keine durch ihre Anordnung und Ausbildung so gut reagierende Temperatursteuerung gefunden wurde. Die Ausbildung des Bodens, also die Platinenform, ist so gewählt, daß im Falle des Leerkochens des Gefäßes an der Randzone der Heizplatine zu der Kocherwandung hin immer noch Wasser vorhanden ist, während ansonsten im Gesamtbereich der Heizfläche keine Flüssigkeit mehr da ist. Ein entsprechender Sicherheitsschalter schaltet beim Leerkochen das Gerät zunächst ab. Das Restwasser nimmt die geringe Energie, die durch kurzes Wiedereinschalten des Heizwiderstandes entsteht, auf und kühlt damit die zugehörige Randzone aus. Dadurch schützt sich das System selbst und es kann nicht zum Anbrennen bzw. zur Beschädigung des Kochergehäuses kommen. Auch neigen Ablagerungen von Kalk o.dgl. zum selbsttätigen Abplatzen von dem Gefäßboden, der im übrigen zur Reinigung völlig frei zugänglich ist. Die Heizplatine kann als Baugruppe für sich nahezu in jedes beliebige Gehäuse eingesetzt werden, wobei auch andere gegen Überhitzung zu - schützende Bereiche als der Randbereich mit einer Restflüssigkeits-Vertiefung versehen sein können.

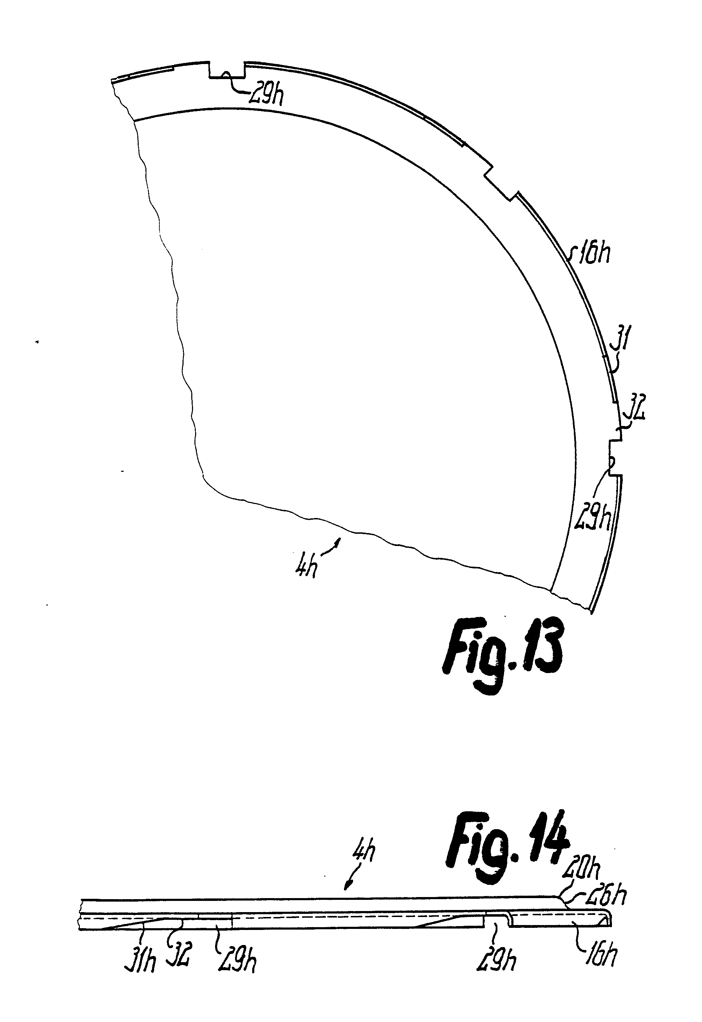

Bei der Ausführungsform nach den Fig. 13 und 14 weist der Gefäßboden 4h einen abgewinkelten äußeren Rand 16h auf, dessen Höhe bzw. Axialerstreckung etwa gleich dem Maß ist, um welches die Meßzone 20h über den dadurch gebildeten, im Querschnitt winkelförmigen Flanschrand nach oben vorsteht. Jedem der acht gleichmäßig über den Umfang verteilten Einführungsausschnitte 29h ist eine in Umfangsrichtung nach Art einer Keilfläche eine Steigung aufweisende Einführungsfläche 31h zugeordnet, die sich über die gesamte Höhe des abgewinkelten Randes 16h erstreckt und somit im wesentlichen ausschließlich in der durch die Einführungsausschnitte 29h unterbrochenen, ansonsten winkelförmigen Randkante des Randes 16h vorgesehen bzw. durch diese gebildet ist. Die - schräge Einführungsfläche 31h reicht im wesentlichen von der inneren Stirnfläche des ringscheibenförmig an den Rand 16h anschlie ßenden, ebenfalls von den Einführungsausschnitten 29h durchsetzten Randteiles, geht also stumpfwinklig in diese innere Stirnfläche über und verbindet diese Stirnfläche mit dem anschließenden, wiederum im wesentlichen steigungsfreien Teil der Randkante. Die schräge Einführungsfläche 31h ist mit der ihr zugekehrten seitlichen Begrenzung des Einführungsausschnittes 29h über einen im wesentlichen steigungsfreien Anfangsabschnitt 32 verbunden, der ebenso wie die Einführungsfläche 31h eine Gleitfläche bildet, mit welcher der Gefäßboden 4h bei Durchführung seiner Befestigungsbewegung an dem Gefäßmantel bzw. an den Riegelnocken gleitet. Der Anfangsabschnitt 32 liegt in der Ebene der inneren Stirnfläche des ringscheibenförmigen Randteiles und kann unmittelbar durch diese Stirnfläche gebildet sein, so daß der Riegelnocken an diesem Anfangsabschnitt praktisch mit seiner gesamten zugehörigen Endfläche an dem Anfangsabschnitt 32 abgestützt werden kann. Die - schräge Einführungsfläche 31h weist dagegen gegenüber dem Anfangsabschnitt 32 wesentlich geringere Radialerstreckung auf, da sie nur durch die Randkante gebildet ist, so daß von ihr wesentlich höhere spezifische Flächendrücke ausgehen und sie wenigstens geringfügig schneidenartig in die Endfläche des aus entsprechend nachgiebigem Material bestehenden Riegelnockens eindringen kann. Dadurch kann der Gefäßboden mit Hilfe der Anfangsabschnitte 32 zunächst spannungsfrei axial gegenüber dem Gefäßmantel gesichert werden, wonach erst durch weiteres Drehen des Gefäßbodens 4h die Einführungsflächen 31h wirksam werden, bis die steigungsfreien Abschnitte der Randkante des Randes 16h in Eingriff mit den Endflächen der Riegelnocken gelangt sind und dadurch der Gefäßboden 4h sicher befestigt ist.

## Ansprüche

1. Elektrische Heizvorrichtung für Flüssigkeiten, dadurch gekennzeichnet, daß sie einen beheizten Gefäßboden (4) aufweist, der von einem äußeren, für den abgedichteten Anschluß an einen Gefäßmantel (3) bestimmten Rand (16) begrenzt ist.

2. Heizvorrichtung, insbesondere nach Anspruch 1, dadurch gekennzeichnet, daß der Gefäßboden (4) wenigstens eine vom Temperaturfühler (13) eines Temperaturschalters erfaßte Meßzone (20) aufweist, daß der Gefäßboden (4) Bereiche unterschiedlicher Höhenlage aufweist und daß die Meßzone (20) durch einen gegenüber dem tiefsten Bereich höheren Bereich des Gefäßbodens (4) gebildet ist und daß vorzugsweise ferner die Meßzone (20) mit Abstand benachbart zum Rand (16) des Gefäßbodens (4) liegt, zwischen sich und diesem Rand (16) den höchsten Bereich des Gefäßbodens (4) bildet und insbesondere durch eine ringförmig eine radial innere Flanke (26) einer im wesentlichen bis zum Rand (16) reichenden Vertiefung (21) bildende Erhebung gebildet ist.

3. Heizvorrichtung, insbesondere nach Anspruch 1 oder 2, dadurch gekennzeichnet, daß der Temperaturfühler (13) unmittelbar im thermischen Einflußbereich eines Heizkörpers für den Gefäßboden (4) liegt, insbesondere mit einem Heizwiderstand (11) über den erhöhten Bereich des Gefäßbodens (4) und/oder über eine dazu benachbarte metallische Verbindung direkt thermisch leitend verbunden bzw. der von der Mittelachse des Gefäßbodens (4) abgekehrten Seite eines zugehörigen Abschnittes des Heizkörpers, insbesondere einem im wesentlichen radial äußersten Abschnitt zugeordnet ist, daß ferner vorzugsweise ein Abschnitt des Heizkörpers (11) im Bereich der Meßzone (20) und der Gefäßboden (4) im Bereich dieses Abschnittes zur Bildung einer Wärmeleitbrücke für den Temperaturfühler (13) insbesondere annähernd so hoch wie die höchste Stelle der Meßzone (20) liegt, von der der Gefäßboden (4) im Querschnitt im wesentlichen zu seiner Mittelachse geringfügig abfällt, daß ferner vorzugsweise die Meßzone (20) gratartig, insbesondere mit stark unterschiedlichen Flankenwinkeln, ausgebildet ist und daß insbesondere der Temperaturfühler (13) annähernd bis an die höchste Stelle der Meßzone (20) reichend im Bereich der flacheren Flanke angeordnet ist, daß ferner vorzugsweise für die Halterung des insbesondere rohrförmigen und mit einer Ausdehnungsflüssigkeit gefüllten metallischen Temperaturfühlers (13) ein metallisch direkt am Gefäßboden (4) befestigtes Tragprofil (14) vorgesehen ist, das den Temperaturfühler (13) auf mindestens der Hälfte seines Umfanges und/oder seiner Länge eng umgibt und bevorzugt minde stens einen gegen den Umfang des Temperaturfühlers (13) gebogenen Profilschenkel (15) aufweist, wobei vorzugsweise der Heizkörper (11) als Rohrheizkörper o.dgl. in, insbesondere um die Mittelachse des Gefäßbodens (4) spiralförmigen Windungen verlegt ist und insbesondere die Meßzone (20) mindestens im Bereich des Heizkörpers (11) die höchste Stelle des Gefäßbodens (4) bildet.

4. Heizvorrichtung, insbesondere nach einem der vorhergehenden Ansprüche, dadurch gekennzeichnet, daß der Temperaturfühler (13) und/oder der Heizkörper (11) außerhalb der für die Flüssigkeitsaufnahme bestimmten Seite des Gefäßbodens (4), insbesondere an dessen Unterseite angeordnet und vorzugsweise im wesentlichen mindestens in der Größenordnung ihrer Querschnittsweite mit dem metallischen Gefäßboden metallisch wärmeleitend verbunden sind.

5. Heizvorrichtung, insbesondere nach einem der vorhergehenden Ansprüche, dadurch gekennzeichnet, daß der Gefäßboden (4) von der Meßzone (20), insbesondere wenigstens über den beheizten Bereich, bis zu einer tiefsten, etwa in seinem Zentrum liegenden, Innenzone flach abfällt, die insbesondere etwa so tief wie die Vertiefung (21) am Rand ist, wobei vorzugsweise der Gefäßboden (4) im Bereich der Vertiefung (21), insbesondere radial außerhalb deren innerer Flanke (26), von Heizkörpern frei ist.

6. Heizvorrichtung, insbesondere nach einem der vorhergehenden Ansprüche, dadurch gekennzeichnet, daß der Gefäßboden (4) durch einen vom Gefäßmantel (3) gesonderten bzw. lösbaren Bauteil gebildet und der, insbesondere abgewinkelte bzw. profilierte und zur Bildung eines Heizgefäßes als Anschlußrand für den Gefäßmantel (3) ausgebildete Rand (16) des Gefäßbodens (4) für die in ein Gegenprofil des insbesondere aus Kunststoff bestehenden Gefäßmantels (3) abgedichtet eingebettete, plastisch eingespritzte, eingeklebte, eingesteckte oder ähnliche Aufnahme ausgebildet ist, wobei vorzugsweise der Gefäßboden (4c), insbesondere der Randbereich (16c) des Gefäßbodens (4c), an den Gefäßmantel (3c) über einen Dehnungsausgleich anschließt, der insbesondere durch eine Wölbbarkeit des Gefäßbodens, einen Randabstand der Außenkante des Gefäßbodens (4c) von der Bodenfläche einer Aufnahme-Ringnut des Gefäßmantels (3c), eine Querprofilierung des Randbereiches (16d) des Gefäßbodens (4d), eine elastische Dichtung (27) o.dgl. gebildet ist.

7. Heizvorrichtung, insbesondere nach einem der vorhergehenden Ansprüche, dadurch gekennzeichnet, daß der Gefäßboden (4f) über eine insbesondere durch eine Drehbewegung des Gefäßbodens (4f) einrückbare Verriegelung (28) formschlüssig mit dem Gefäßmantel (3f) verbunden ist und daß die Verriegelung (28) vorzugsweise nach Art eines Bajonettverschlusses ausgebildet ist.

8. Heizvorrichtung, insbesondere nach einem der vorhergehenden Ansprüche, dadurch gekennzeichnet, daß das Gegenprofil des Gefäßmantels (3f) auf einer Seite des Randes (16f) des Gefäßbodens (4f) eine Anlageschulter (31) und auf der anderen Seite über den Umfang verteilte Riegelnocken (18f) aufweist, denen randoffene Einführungsausschnitte (29) am Rand (16f) des Gefäßbodens (4f) zugeordnet sind und daß vorzugsweise mindestens ein Riegelnocken (18f) durch das Ende eines rippenförmigen Längssteges (30) des Gefäßmantels (3f) gebildet ist, der insbesondere an der Unterseite des Gefäßbodens (4f) liegt und annähernd bis zu dessen unteren Ende reicht.

9. Heizvorrichtung, insbesondere nach einem der vorhergehenden Ansprüche, dadurch gekennzeichnet, daß der Gefäßboden (4h) im wesentlichen mit einer Randkante (33) an dem Gefäßmantel insbesondere axial abgestützt ist bzw. daß für die Verriegelung insbesondere am Gefäßboden (4h) ansteigende Einführungsflächen (31h) vorgesehen sind, die vorzugsweise im Anschluß an den jeweiligen Einführungsausschnitt (29h) einen im wesentlichen steigungsfreien Anfangsabschnitt (32) aufweisen.

10. Heizvorrichtung, insbesondere nach einem der vorhergehenden Ansprüche, dadurch gekennzeichnet, daß der Rand (16f) des Gefäßbodens (4f) mit einer Ringdichtung (27f) gegenüber dem Gegenprofil bzw. dem Gefäßmantel (3f) abgedichtet ist, wobei die Ringdichtung (27f) vorzugsweise an mindestens einer Stirnfläche des Randes (16f) anliegt und mindestens teilweise gegenüber den Einführungsausschnitten (29) radial nach innen versetzt ist.

Fig.1

Fig.2

*Fig. 1a*

0 285 839

Fig.3

Fig.6

Fig.4

Fig.7

Fig.5

Fig.8

Fig.9

Fig.10

**Fig. 11**

**Fig. 12**

29h

16h

31

32

29h

4h

**Fig.13**

**Fig.14**

4h

20h

26h

31h 32 29h

29h

16h